# DEMANDE DE BREVET EUROPEEN

(11) **EP 4 268 591 A1**
(43) Date de publication de la demande: **01.11.2023**
(21) Numéro de dépôt: 23170418.0
(22) Date de dépôt: 27.04.2023
(51) Int. Cl.: A01K 27/00, F16G 11/04, F16G 11/10

(54) **BUTEE MOBILE ADAPTEE POUR ETRE MONTEE COULISSANTE LE LONG D'UNE LAISSE POUR CHIEN**

(30) Priorité: 27.04.2022 FR 2203963
(71) Demandeur: Dhumetz, Didier, 62223 Sainte-Catherine (FR)
(72) Inventeur: Dhumetz, Didier, 62223 Sainte-Catherine (FR)
(74) Mandataire: RVDB

(57) **Abrégé**

L'invention concerne une butée (10) mobile adaptée pour être montée coulissante le long d'une laisse (12) pour chien, caractérisée en ce qu'elle comporte au moins un corps (14) qui délimite une face externe de préhension et un trou de passage interne qui traverse axialement le corps (14) suivant un axe (A) central pour permettre le passage d'une laisse (12), et un moyen de verrouillage (38) qui est porté par le corps (14) et qui est conçu pour occuper une position de verrouillage dans laquelle le moyen de verrouillage restreint ledit trou de passage prévu pour la laisse (12), afin de comprimer la laisse (12) et verrouiller le corps (14) de la butée (10) axialement sur la laisse (12), et une position de déverrouillage dans laquelle le moyen de verrouillage (38) libère ledit trou de passage pour déverrouiller le corps (14) qui peut alors coulisser axialement le long de la laisse (12).

## Description

### Domaine de l'invention

La présente demande de brevet se rapporte au domaine de l'éducation canine.

La présente invention trouvera une application avantageuse en équipant une laisse destinée à la promenade d'un chien.

### Etat de la technique

Dans le domaine de l'éducation canine, on sait que le chien s'oppose à la tension crée par le maître, par l'intermédiaire de la laisse.

En effet, plus le maître raccourcit et tire sur la laisse, plus le chien va tirer sur la laisse.

Il est important que le maître place sa main au bon endroit sur la laisse, de façon que cette dernière ne soit tenue ni trop courte pour éviter que le chien ne tire, ni trop longue pour permettre de contrôler le chien.

Idéalement, l'épaule du chien de doit pas dépasser la jambe du maître.

Il est connu de réaliser un noeud repère sur la laisse, noeud qui forme une boursouflure permettant de matérialiser l'endroit idéal où la main du maître doit être placée.

Bien que ce type de noeud repère permette au maître de placer sa main idéalement sur la laisse, il présente certains inconvénients.

En effet, un jeune chien va grandir au cours de son éducation, ce qui implique de défaire et de refaire le noeud régulièrement sur la laisse selon l'évolution de la taille du chien.

Or, il est parfois difficile de défaire un noeud sur une laisse lorsque la laisse a subi de fortes tensions et que le noeud est trop serré.

Aussi, il apparaît qu'un chien possède parfois plusieurs maîtres, c'est à dire plusieurs personnes qui le promènent.

Ces différents maîtres peuvent présenter une taille différente et une longueur de bras différente, de sorte que le noeud repère qui est adapté à un maître ne le sera pas pour un autre maître.

Or, on constate qu'il est parfois impossible de placer deux noeuds repères sur une même laisse à cause de la trop grande proximité de ces deux noeuds.

De plus, deux noeuds repères trop proches ne permettent pas une bonne préhension d'un seul des deux noeuds, et la présence de deux noeuds repères peut engendrer une confusion.

### Exposé de l'invention

La présente invention a notamment pour but de résoudre les inconvénients de l'art antérieur précité en proposant une solution qui permet de fournir un repère physique sur la laisse, qui s'adapte à la croissance d'un chien et qui est adaptée à une utilisation de la laisse par plusieurs personnes.

On atteint cet objectif, ainsi que d'autres qui apparaîtront à la lecture de la description qui suit, avec une butée mobile adaptée pour être montée coulissante le long d'une laisse pour chien, caractérisée en ce qu'elle comporte au moins :
un corps qui délimite une face externe de préhension et un trou de passage interne qui traverse axialement le corps suivant un axe central pour permettre le passage d'une laisse, et
un moyen de verrouillage qui est porté par le corps et qui est conçu pour occuper une position de verrouillage dans laquelle le moyen de verrouillage restreint ledit trou de passage prévu pour la laisse, afin de comprimer la laisse et verrouiller le corps de la butée axialement sur la laisse, et une position de déverrouillage dans laquelle le moyen de verrouillage libère ledit trou de passage pour déverrouiller le corps qui peut alors coulisser axialement le long de la laisse.

Ainsi, la butée mobile selon l'invention peut être positionnée rapidement et aisément le long de la laisse, à un endroit adapté pour la personne qui utilise la laisse et pour le chien au bout de la laisse. Suivant d'autres caractéristiques optionnelles de l'invention, prises seules ou en combinaison :
- le moyen de verrouillage est formé par une pince à ressort qui comprend au moins deux branches axiales agencées le long du trou de passage prévu pour la laisse, ladite pince étant conçue pour occuper une position de verrouillage dans laquelle lesdites banches de la pince sont comprimées et restreignent le trou de passage pour comprimer la laisse et verrouiller le corps axialement sur la laisse, et une position de déverrouillage dans laquelle lesdites branches sont dilatées et libèrent ledit trou de passage pour déverrouiller le corps qui peut alors coulisser axialement le long de la laisse. La pince à ressort offre un moyen de verrouillage efficace qui présente des garanties de blocage de la butée sur la laisse même en cas d'une forte traction du chien sur la laisse et la butée maintenue par le maître ;
- le corps de la butée comprend une première partie qui forme un cône de serrage interne adapté pour coopérer avec une première face tronconique complémentaire de la pince à ressort, la première partie du corps étant montée mobile axialement sur une seconde partie du corps, entre une position de serrage dans laquelle le cône de serrage coopère avec la première face tronconique de la pince pour entraîner la pince dans sa position de verrouillage, et une position de desserrage dans laquelle le cône de serrage libère la pince dans sa position de déverrouillage ;
- la première partie du corps est montée vissée sur la seconde partie du corps, de sorte que ladite première partie est montée mobile axialement sur la seconde partie entre sa position de serrage et sa position de desserrage de la pince à ressort. Cette caractéristique permet de verrouiller et de déverrouiller aisément la butée sur la laisse par simple vissage et dévissage des deux parties formant le corps de la butée ;

- la pince comporte une seconde face tronconique qui coopère avec un siège annulaire du corps, pour bloquer axialement la pince dans le corps ;
- la pince à ressort présente une forme globalement tubulaire qui s'étend axialement, ladite pince comprenant une pluralité de saignées axiales qui forment lesdites branches de la pince. Cette caractéristique permet de réaliser la pince en une seule pièce ;
- la face externe de préhension du corps présente une forme sphérique. Cette caractéristique favorise la prise en main de la butée.

L'invention concerne également un ensemble comportant une laisse et une butée mobile du type décrite précédemment.

### Brève description des dessins

D'autres caractéristiques et avantages de l'invention ressortiront à la lecture de la description qui suit, en référence aux figures annexées, qui illustrent :
[Fig. 1] : une vue d'ensemble d'une laisse équipée d'une butée mobile selon l'invention ;
[Fig. 2] : une vue de détail de la butée mobile selon l'invention, logée dans le creux d'une main ;
[Fig. 3] : une vue en perspective éclatée axialement de la butée de la figure 1 ;
[Fig. 4] : une vue en coupe axiale de la butée de la figure 1, dans sa position de déverrouillage du corps de la butée sur la laisse ;
[Fig. 5] : une vue en coupe axiale de la butée de la figure 1, dans sa position de verrouillage du corps de la butée sur la laisse ;
[Fig. 6] : une vue de dessous de la pince à ressort logée dans le corps de la butée mobile selon l'invention ;
[Fig. 7] : une vue en perspective éclatée axialement d'une butée suivant un deuxième mode de réalisation ;
[Fig. 8] : une vue de dessous de la pince à ressort logée dans le corps de la butée mobile selon le deuxième mode de réalisation de l'invention.

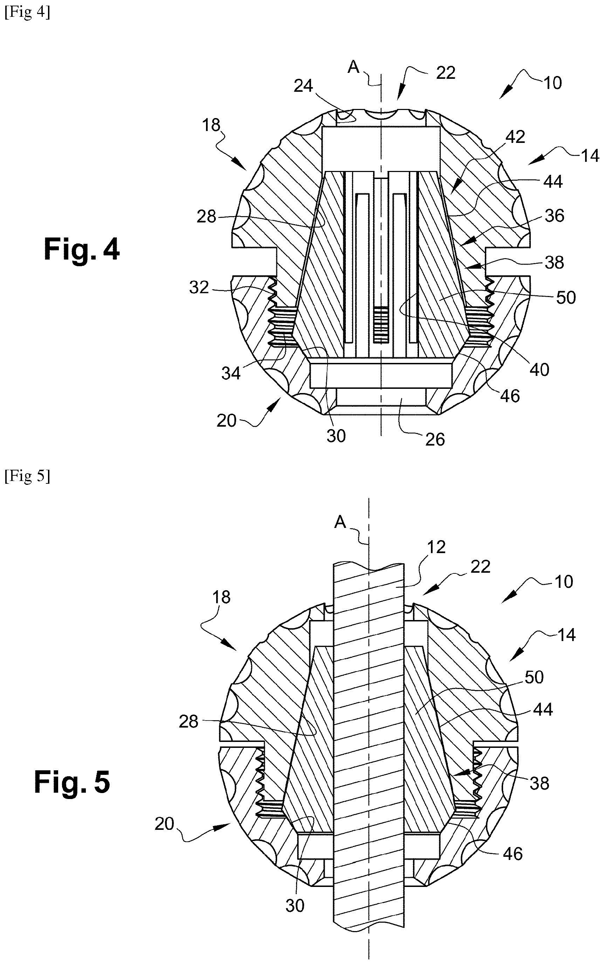

Dans la description et les revendications, on adoptera à titre non limitatif les expressions « supérieur », « inférieur » et « bas », « haut » en référence à la partie supérieure et à la partie inférieure respectivement de la figure 4.

Aussi, les termes « axial » et « radial » font référence à l'axe A central de la butée.

Sur l'ensemble de ces figures, les éléments identiques ou similaires sont repérés par des signes de référence identiques ou similaires.

### Description détaillée

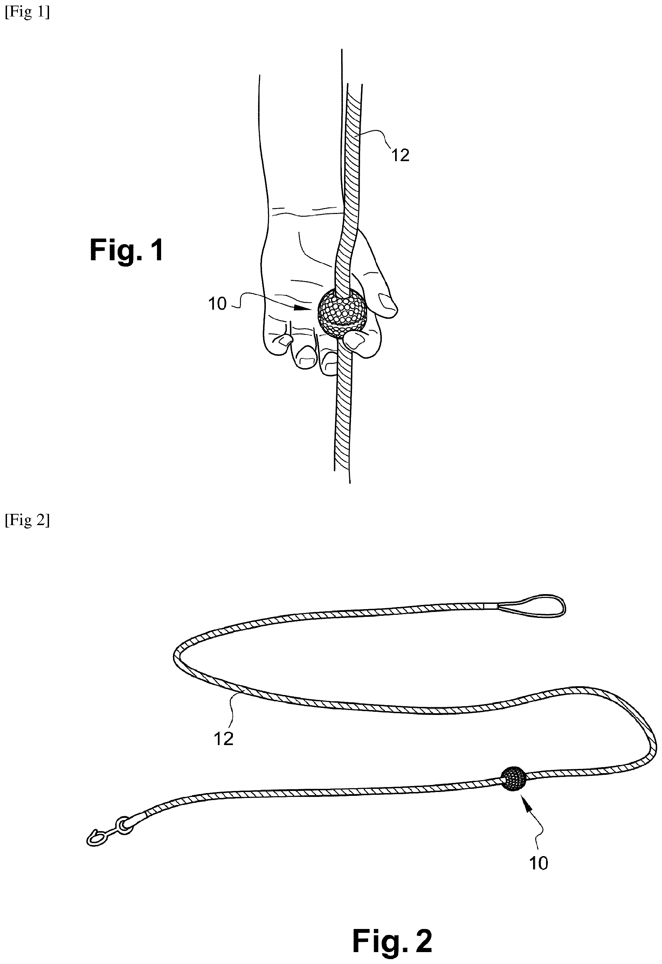

On a représenté aux figures 1 et 2 un ensemble qui comprend une butée 10 mobile montée coulissante le long d'une laisse 12 pour chien.

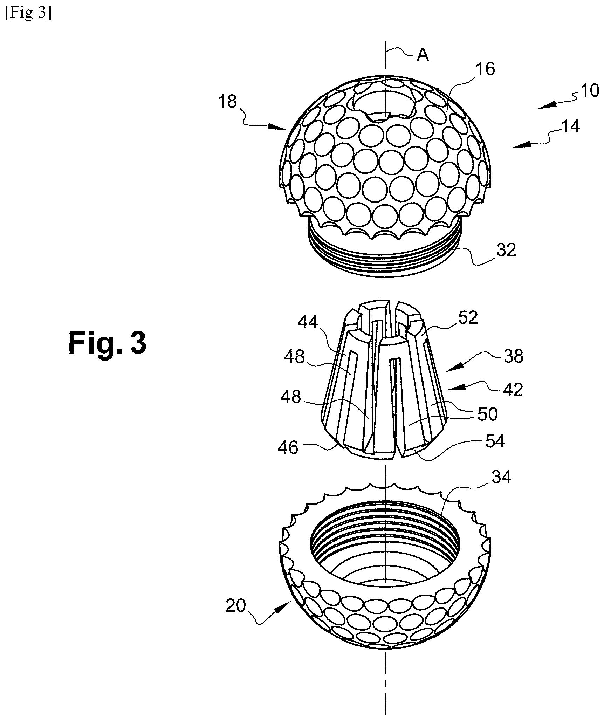

Comme on peut le voir à la figure 3, la butée 10 comporte un corps 14 qui est délimité par une face externe 16 de préhension de forme sphérique.

La face externe 16 du corps 14 de la butée 10 dessine une pluralité d'anfractuosités pour favoriser la préhension de la butée 10.

En référence à la figure 4, le corps 14 de la butée 10 est réalisé en deux parties qui sont chacune globalement hémisphériques, une première partie 18 mâle supérieure et une seconde partie 20 femelle inférieure.

Aussi, le corps 14 de la butée 10 délimite un trou de passage 22 interne qui traverse axialement le corps 14 suivant un axe A central, pour permettre le passage de la laisse 12.

Le trou de passage 22 interne débouche axialement à travers la première partie 18 mâle et la seconde partie 20 femelle du corps 14, par un premier orifice 24 supérieur et un second orifice 26 inférieur respectivement, qui sont prévus pour le passage de la laisse 12.

De plus, la partie mâle 18 du corps 14 de la butée 10 forme un cône de serrage 28 qui s'étend suivant l'axe A central et qui présente une section croissante vers le bas, c'est à dire vers la partie femelle 20 du corps 14.

Dans le prolongement du cône de serrage 28, la partie femelle 20 du corps 14 forme un siège 30 annulaire de forme tronconique qui s'étend autour de l'axe A central et qui présente une section croissante vers le haut.

En outre, la première partie 18 mâle supérieure du corps 14 comporte un manchon 32 cylindrique fileté et la seconde partie 20 femelle inférieure délimite un alésage 34 taraudé de forme complémentaire, qui est prévu pour coopérer avec le manchon 32 fileté de la partie mâle 18.

Ainsi, la partie mâle 18 et la partie femelle 20 du corps 14 sont montées mobiles axialement l'une par rapport à l'autre suivant l'axe A, entre une position dévissée de desserrage illustrée à la figure 4, dans laquelle le cône de serrage 28 est écarté axialement du siège 30, et une position vissée de serrage illustrée à la figure 5, dans laquelle le cône de serrage 28 est rapproché axialement du siège 30.

Le cône de serrage 28 et le siège 30 annulaire du corps 14 délimitent un logement 36 dans lequel une pince 38 à ressort est agencée.

La pince 38 à ressort forme un moyen de verrouillage, qui permet de verrouiller et de bloquer axialement la laisse 12 sur le corps 14 de la butée 10.

A cet effet, la pince 38 à ressort présente une forme globalement tubulaire qui s'étend axialement suivant l'axe A central et qui comprend une surface interne 40 cylindrique et une surface externe 42. La surface interne 40 de la pince 38 à ressort est prévue pour le passage de la laisse 12.

La surface externe 42 de la pince 38 à ressort comprend une première face tronconique 44 supérieure qui s'étend suivant l'axe A central et qui présente une section croissante vers le bas, et une seconde face tronconique 46 inférieure qui s'étend suivant l'axe A central et qui présente une section décroissante vers le bas.

Comme on peut le voir à la figure 4, la première face tronconique 44 de la pince 38 forme une face de congruence qui coopère avec le cône de serrage 28 du corps 14.

De même, la seconde face tronconique 46 de la pince 38 forme une face de congruence qui coopère avec le siège 30 annulaire du corps 14.

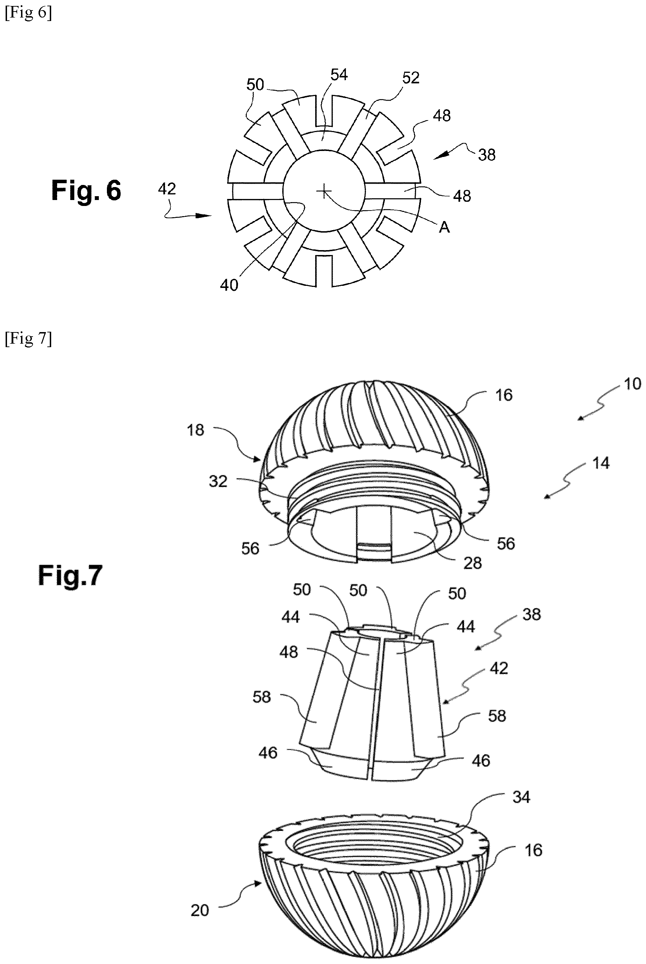

De plus, dans un premier mode de réalisation, comme on peut le voir aux figures 3 et 6, la pince 38 à ressort présente une pluralité de saignées 48 sur sa longueur axiale qui forment douze branches 50 réparties angulairement de manière régulière autour de l'axe A central.

Les branches 50 sont, dans ce premier mode de réalisation, reliées deux à deux alternativement par une portion de raccord supérieure 52 et par une portion de raccord inférieure 54, de sorte que les branches 50 et les portions de raccord forment des créneaux.

Une telle conception de la pince 38 permet de réaliser la pince 38 en une seule pièce.

La pince 38 est réalisée par moulage en matière plastique, par exemple.

Les branches 50 de la pince 38 permettent la contraction et la dilatation radiale de la pince 38 pour permettre le verrouillage et le déverrouillage axial de la laisse 12.

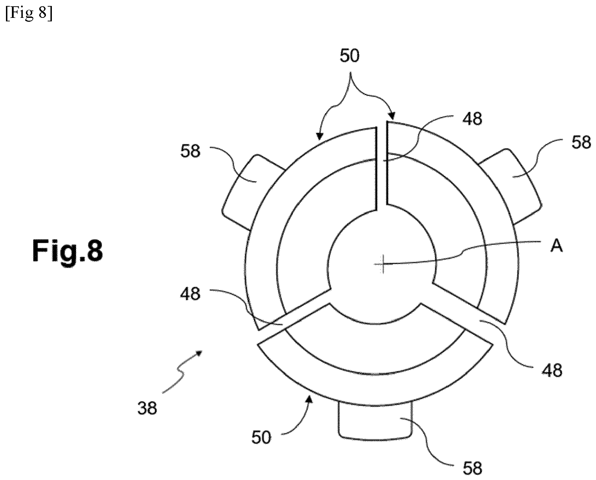

Dans un deuxième mode de réalisation, comme on peut le voir aux figures 7 et 8, la pince 38 à ressort est formée de trois branches 50 réparties angulairement de manière régulière autour de l'axe A central, séparées par une pluralité de saignées 48 sur sa longueur axiale qui forment. Ces trois branches peuvent ainsi être des pièces distinctes, ou une même pièce en les liant par des portions de raccords tels que présentés dans le premier mode de réalisation.

Une telle conception de la pince 38 permet de réaliser la pince 38 en plusieurs pièces identiques, plus simples de réalisation que la pince 38 présentée dans le premier mode de réalisation. Le nombre de pièces composant la pince 38 peut ne pas être égale à 3, mais à tout nombre supérieur ou égale à 2, par exemple 2, 3 ou 12.

Comme pour le premier mode de réalisation, la pince 38 est réalisée par moulage en matière plastique, par exemple.

Les branches 50 de la pince 38 permettent la contraction et la dilatation radiale de la pince 38 pour permettre le verrouillage et le déverrouillage axial de la laisse 12. On entend par contraction, dans ce mode de réalisation, un rapprochement des différentes branches 50 de l'axe A central, et par dilatation un écartement des différentes branches 50 de l'axe A central.

Plus particulièrement, la pince 38 est conçue pour occuper une position de verrouillage illustrée à la figure 5, dans laquelle les banches 50 de la pince 38 sont comprimées radialement et restreignent le trou de passage 22 pour comprimer la laisse 12 et verrouiller le corps 14 axialement sur la laisse 12, et une position de déverrouillage illustrée à la figure 4, dans laquelle les branches 50 sont dilatées et libèrent le trou de passage 22 pour déverrouiller le corps 14 qui peut alors coulisser axialement le long de la laisse 12.

A cet effet, pour entraîner la pince 38 dans sa position de verrouillage, il convient de visser la partie mâle 18 sur la partie femelle 20 du corps 14 vers leur position de serrage dans laquelle le cône de serrage 28 du corps 14 coopère avec la première face tronconique 44 de la pince 38 pour comprimer les branches 50 de la pince 38, et dans laquelle la seconde face tronconique 46 de la pince 38 est en appui axial sur le siège 30 annulaire du corps 14 de sorte que la pince 38 est bloquée axialement vers le bas par rapport au corps 14.

Aussi, dans la position de verrouillage de la pince 38, les banches 50 de la pince 38 exercent un effort de frottement et un pincement qui bloquent l'ensemble formé par la pince 38 et le corps 14 axialement sur la laisse 12.

A l'inverse, pour entraîner la pince 38 depuis sa position de verrouillage jusqu'à sa position de déverrouillage, il convient de dévisser la partie mâle 18 sur la partie femelle 20 du corps 14 vers leur position de desserrage dans laquelle le cône de serrage 28 du corps 14 libère la pince 38, de sorte que les branches 50 de la pince 38 libèrent la laisse 12 qui peut coulisser axialement sur la laisse 12.

Ainsi, la butée 10 mobile selon l'invention peut être positionnée de façon précise et rapide sur la laisse 12, en dévissant le corps 14, en faisant coulisser la butée 10 à l'endroit souhaité, puis en revissant le corps 14 de la butée 10.

De plus, la butée 10 selon l'invention remplit également une fonction de poignée qui favorise la préhension et la retenue de la laisse 12.

En effet, la butée 10 permet de retenir la laisse 12 lorsque le chien tire brusquement sur la laisse 12, par exemple lorsque le chien croise un congénère.

De plus, la butée 10 favorise la transmission de tractions sèches, rapides et puissantes à travers la laisse 12, pour que le chien se replace à côté de son maître, cela grâce à la bonne prise en main offerte par la butée 10.

Naturellement, l'invention est décrite dans ce qui précède à titre d'exemple.

Il est entendu que l'homme du métier est à même de réaliser différentes variantes de réalisation de l'invention sans pour autant sortir du cadre de l'invention.

Par exemple, le moyen de verrouillage qui restreint le trou de passage 22 formé par le corps 14, pour comprimer la laisse 12 et verrouiller le corps 14 axialement sur la laisse 12, peut être formé par une vis pointeau qui traverse radialement le corps 14 de la butée 10 pour comprimer la laisse 12 et verrouiller le corps 14 axialement sur la laisse 12.

Selon cette variante de réalisation non représentée, la vis pointeau est conçue pour occuper une position de verrouillage dans laquelle la vis pointeau restreint le trou de passage 22 pour comprimer la laisse 12 et verrouiller le corps 14 axialement sur la laisse 12, et une position de déverrouillage dans laquelle la vis pointeau libère le trou de passage 22 pour déverrouiller le corps 14 qui peut alors coulisser axialement le long de la laisse 12.

## Revendications

1. Butée (10) mobile adaptée pour être montée coulissante le long d'une laisse (12) pour chien, **caractérisée en ce qu'**elle comporte au moins :
un corps (14) qui délimite une face externe (16) de préhension et un trou de passage (22) interne qui traverse axialement le corps (14) suivant un axe (A) central pour permettre le passage d'une laisse (12), et
un moyen de verrouillage (38) qui est porté par le corps (14) et qui est conçu pour occuper une position de verrouillage dans laquelle le moyen de verrouillage restreint ledit trou de passage (22) prévu pour la laisse (12), afin de comprimer la laisse (12) et verrouiller le corps (14) de la butée (10) axialement sur la laisse (12), et une position de déverrouillage dans laquelle le moyen de verrouillage (38) libère ledit trou de passage (22) pour déverrouiller le corps (14) qui peut alors coulisser axialement le long de la laisse (12).

2. Butée (10) mobile selon la revendication 1, **caractérisée en ce que** le moyen de verrouillage (38) est formé par une pince (38) à ressort qui comprend au moins deux branches (50) axiales agencées le long du trou de passage (22) prévu pour la laisse (12), ladite pince (38) étant conçue pour occuper une position de verrouillage dans laquelle lesdites banches (50) de la pince (38) sont comprimées et restreignent le trou de passage (22) pour comprimer la laisse (12) et verrouiller le corps (14) axialement sur la laisse (12), et une position de déverrouillage dans laquelle lesdites branches (50) sont dilatées et libèrent ledit trou de passage (22) pour déverrouiller le corps (14) qui peut alors coulisser axialement le long de la laisse (12).

3. Butée (10) mobile selon la revendication 2, **caractérisée en ce que** le corps (14) de la butée (10) comprend une première partie (18) qui forme un cône de serrage (28) interne adapté pour coopérer avec une première face tronconique (44) complémentaire de la pince (38) à ressort, la première partie (18) du corps (14) étant montée mobile axialement sur une seconde partie (20) du corps (14), entre une position de serrage dans laquelle le cône de serrage (28) coopère avec la première face tronconique (44) de la pince (38) pour entraîner la pince (38) dans sa position de verrouillage, et une position de desserrage dans laquelle le cône de serrage (28) libère la pince (38) dans sa position de déverrouillage.

4. Butée (10) mobile selon la revendication 3, **caractérisée en ce que** la première partie (18) du corps (14) est montée vissée sur la seconde partie (20) du corps (14), de sorte que ladite première partie (18) est montée mobile axialement sur la seconde partie (20) entre sa position de serrage et sa position de desserrage de la pince (38) à ressort.

5. Butée (10) mobile selon l'une quelconque des revendications 3 ou 4, **caractérisée en ce que** la pince (38) comporte une seconde face tronconique (46) qui coopère avec un siège (30) annulaire du corps (14), pour bloquer axialement la pince (38) dans le corps (14).

6. Butée (10) mobile selon la revendication 2, **caractérisée en ce que** la pince (38) à ressort présente une forme globalement tubulaire qui s'étend axialement, ladite pince (38) comprenant une pluralité de saignées (48) axiales qui forment lesdites branches (50) de la pince (38).

7. Butée (10) mobile selon l'une quelconque des revendications précédentes, **caractérisée en ce que** la face externe (16) de préhension du corps (14) présente une forme sphérique.

8. Ensemble comportant une laisse (12) et une butée (10) mobile selon l'une quelconque des revendications précédentes.
